# EUROPÄISCHE PATENTSCHRIFT

(11) **EP 3 350 252 B1**
(45) Veröffentlichungstag und Bekanntmachung des Hinweises auf die Patenterteilung: **02.12.2020**
(21) Anmeldenummer: 16766256.8
(22) Anmeldetag: 06.09.2016
(51) Int. Cl.: C08J 9/00, C08J 9/04, C08L 33/24, C08F 220/46, C08J 9/16, C08J 9/228

(54) **MEHRFUNKTIONALE ALKOHOLE ALS VERNETZER IN PMI-SCHAUMSTOFFEN**
MULTIFUNCTIONAL ALCOHOLS AS CROSSLINKING AGENTS FOR PMI FOAMS
ALCOOLS MULTIFONCTIONNELS COMME AGENTS DE RÉTICULATION POUR PMI EXPANSÉ

(30) Priorität: 15.09.2015 EP 15185179
(43) Veröffentlichungstag der Anmeldung: 25.07.2018
(73) Patentinhaber: Evonik Operations GmbH, 45128 Essen (DE)
(72) Erfinder: RICHTER, Thomas, 64293 Darmstadt (DE); BARTHEL, Thomas, 64646 Heppenheim (DE); BORK, Lars, 64331 Weiterstadt (DE); SEIPEL, Christoph, 64832 Babenhausen (DE); BERNHARD, Kay, Cheshire, CT 06410 (US)
(74) Vertreter: Evonik Patent Association
(86) Internationale Anmeldenummer: PCT/EP2016/070917
(87) Internationale Veröffentlichungsnummer: WO 2017/045965

(56) Entgegenhaltungen:
- EP-A2- 0 791 621
- DATABASE WPI Week 201148 Thomson Scientific, London, GB; AN 2011-G21001 XP002745687, -& CN 102 020 821 A (XUSHUISEN BOWO MATERIAL SCI&TECHNOLOGY CO LTD) 20. April 2011 (2011-04-20)
- DATABASE WPI Week 201418 Thomson Scientific, London, GB; AN 2013-S02119 XP002745688, -& CN 103 146 109 A (ZHEJIANG LIANYANG COMPOUND MATERIAL CO L) 12. Juni 2013 (2013-06-12)
- DATABASE WPI Week 201430 Thomson Scientific, London, GB; AN 2014-E93067 XP002745689, -& CN 103 524 968 A (JIANGSU ZHAOYUN NEW MATERIALS TECHNOLOGY) 22. Januar 2014 (2014-01-22)

## Beschreibung

Die Erfindung betrifft die Herstellung von PMI Schaumstoffen, insbesondere deren Rezepturbestandteile, welche zu einer besonders guten Einstellbarkeit der Dichte bei gegebener Schäumtemperatur führen.

### Stand der Technik

Poly(meth)acrylimid (PMI) Schaumstoffe basierend auf (Meth)acrylsäure und (Meth)acrylnitril sind bekannt für ihre hohe Druckfestigkeit und Temperaturbeständigkeit. Hergestellt werden diese Schaumstoffe standardmäßig durch die Polymerisation der entsprechenden Monomere in Anwesenheit von Treibmitteln und weiteren benötigten Additiven in Form von Gussplatten, welche nach erfolgter Polymerisation durch Temperaturbehandlung aufgeschäumt werden.

Die Dichte der so gewonnen und kommerziell vertriebenen Schaumstoffe liegt im Allgemeinen im Bereich von 25 bis 400 kg/m³. Die erhaltene Dichte des Schaumstoffes nach der Schäumung hängt bei gleicher Treibmittelzusammensetzung von der Schäumtemperatur ab. Hierbei sinkt die Dichte bei zunehmender Schäumtemperatur bzw. steigt die Dichte mit abnehmender Schäumtemperatur.

So wird in DE 27 26 260 die Herstellung von Poly(meth)acrylimid-Schäumen (PMI-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Ein Nachteil der in DE 27 26 260 beschriebenen Schäume ist ihre grobe Porenstruktur. Durch Variation der Treibmittel kann die Porengröße bereits erheblich gesenkt werden.

Der Einsatz von Vernetzern in PMI Schäumen zur Realisierung besonders feinporiger Schäume wird u.a. beschrieben in EP 1 678 244. Hierbei wird der Einfluss des Vernetzers auf die thermomechanischen Eigenschaften, wie zum Beispiel die Wärmeformbeständigkeit, sowie die Schaumhomogenität hervorgehoben. Als mögliche Vernetzer werden mehrfach ungesättigte Monomere, wie z.B. Diethylenglykoldiacrylat oder -dimethacrylat oder Allyl(meth)acrylat, oder aber ionische Vernetzer, wie z.B. mehrwertige Metallkationen, die ionische Brücken zwischen den Säuregruppen der Copolymere ausbilden, beschrieben.

DE 197 17 483 beschreibt ein Verfahren zur Herstellung von Polymethacrylimid-Schaumstoffen, die mit 1-5 Gew.-%, bezogen auf die Monomermischung, MgO als ionischem Vernetzer versetzt sind. Man erhält Schäume mit deutlich verbesserten thermomechanischen Eigenschaften.

CN 103554354 beschreibt den Einsatz von N,N'-4,4'-diaminodiphenylmethanebismaleimide (BMI) in PMI-Schäumen. Ziel ist hierbei Schäume mit hohen Dichten herzustellen. Als Vernetzer werden hierbei auch mehrfach ungesättigte Monomere und ionische Vernetzer, insbesondere Mg-Ionen, beschrieben.

Mechanisch stabile PMI-Schäume, die mit Allylmethacrylat vernetzt sind, finden sich in EP 0 356 714. Als Radikalbildner wird beispielsweise Azo-bis-isobutyronitril verwendet, dem zu polymerisierenden Gemisch werden 0,1 Gew% bis 10 Gew% an elektrisch leitfähigen Partikeln zugesetzt Gleiches gilt für die in JP 2006 045532 offenbarten, mit Metallsalzen ionisch vernetzten PMI-Schäume.

Grundsätzlich sind viele der beschriebenen Verfahren für PMI-Schäume auch auf die Herstellung von Polyacrylimid- (Pl-)Schäume übertragbar. Solche Pl-Schäume auf Basis von Methacrylsäure und Acrylnitril werden beispielsweise in der CN 100420702C beschrieben.

Darüber hinaus werden Verfahren zur Herstellung von PMI-Schäumen beschrieben in der CN 103524968, in der CN 103146109, in der CN 102020821, und in der EP 0 791 621.

Wie beschrieben ist die Dichte von PMI-Schäumen bei gleicher Zusammensetzung und Menge der Treibmittel von der Schäumtemperatur abhängig. Verschiedene Typen von PMI-Schaumstoffen, wie sie beispielsweise unter dem Produktnamen Rohacell® von der EVONIK Industries AG vertrieben werden, unterscheiden sich jedoch in ihrer Treibmittelzusammensetzung. Daher unterscheiden sie sich auch in ihren Schäumtemperaturen, um die gleiche Dichte zu erreichen. Für eine effiziente Produktion von PMI-Schaumstoffen wäre es daher wünschenswert, wenn verschiedene Typen von PMI-Schaumstoffen mit zueinander variierenden Zusammensetzungen oder unterschiedlichen Treibmittelzusammensetzungen bei der gleichen Schäumtemperatur unter Erhalt identischer Dichten hergestellt werden könnten. Dies würde die Produktionsprozesse deutlich vereinfachen, da eine Temperaturumstellung des Schäumofens nicht mehr nötig wäre.

### Aufgabe

Aufgabe der vorliegenden Erfindung war es daher, ein Verfahren zu entwickeln, mittels dem die Abhängigkeiten beim Schäumen von P(M)I zwischen Treibmittelzusammensetzung, Schäumtemperatur und erhaltener Dichte voneinander zu entkoppeln wären.

Insbesondere war es Aufgabe der vorliegenden Erfindung, mittels diesem Verfahren es möglich zu machen, auch bei gleicher Schäumtemperatur und unterschiedlicher Treibmittelzusammensetzung die gleiche Dichte des PMI Schaumstoffes zu erhalten.

Alternativ war es Aufgabe der vorliegenden Erfindung, ein Verfahren zur Verfügung zu stellen, mit dem bei gleicher Schäumtemperatur und gleicher Treibmittelzusammensetzung unterschiedliche Schaumdichten erhalten werden.

### Lösung

Gelöst wurden die Aufgaben durch ein neuartiges Verfahren zur Herstellung eines Schaumstoffen, bzw. Hartschaumstoffen aus Poly(meth)acrylimid, welches dadurch gekennzeichnet ist, dass eine Mischung enthaltend (Meth)acrylnitril, (Meth)acrylsäure, ein Polyol, einen Initiator und mindestens ein Treibmittel zu einer Platte oder einem Pulver polymerisiert, optional getempert, und anschließend bei einer Temperatur zwischen 120 und 300 °C geschäumt wird.

Hierbei handelt es sich bei dem Polyol um ein Diol, namentlich um Ethylenglycol, 1,10-Decandiol, beta-Hydroxyalkylamide, OH-telecheles Polytetrahydrofuran mit einer mittleren Molmasse zwischen 500 und 8000 g/mol, oder um OH-telechele Polyolefine, Polycarbonate, Polyoxymethylene, Polyethylenglycole, Polypropylenglycole oder Polyester jeweils mit einer Molmasse zwischen 200 und 10 000 g/mol.

Konkret besteht die eingesetzte Mischung aus
- 20 bis 60 Gew% (Meth)acrylnitril,
- 40 bis 78 Gew% (Meth)acrylsäure,
- 0 bis 20 Gew% weiteren monofunktionellen, vinylisch ungesättigten Monomeren,
- einem oder mehreren Polyolen in einer derartigen Menge, dass die Hydroxylzahl der Mischung zwischen 0,0008 und 0,2 mol OH-Gruppen / 100 g Polymer, bevorzugt zwischen 0,001 und 0,1 mol OH-Gruppen / 100 g Polymer liegt,
- 1 bis 15 Gew% eines Treibmittels, eines copolymerisierbaren Treibmittels oder eines Treibmittelgemischs,
- optional 0 bis 5 Gew% weitere Vernetzer,
- einem Initiatorsystem und
- üblichen Zusatzstoffen.

Erfindungsgemäß wirken die Polyole gezielt beim Schäumen als Vernetzer, gehen jedoch vorteilhafterweise bei der vorangehenden Polymerisation oder dem Tempern, entgegen den aus dem Stand der Technik bekannten Vernetzern, keine Vernetzungsreaktion ein. Die Vernetzungsreaktion erfolgt dabei mit an der Polymerkette vorliegenden Säure- oder optional Anhydrid- oder Imidgruppen unter Esterbildung.

Es wurde festgestellt, dass die Vernetzung erst während der Schäumung, d.h. bei Temperaturen oberhalb von 120°C, stattfindet. Eine Vernetzung die vor der Schäumung erfolgt kann zu einem Aufreißen des Schaumes führen, da die Schäumung zu stark behindert wird.

Durch den Einsatz der Polyole konnte überraschenderweise die Dichte der erhaltenen Schaumstoffe bei gleicher Treibmittelzusammensetzung sehr gut eingestellt werden. Bei gleichem Polyol, gleicher Treibmittelzusammensetzung und gleicher Schäumtemperatur zeigte sich bei einer Erhöhung der Einsatzmenge des Polyols eine Zunahme der Dichte des erhaltenen PMI Schaumstoffes.

Die wesentlichen Vorteile des erfindungsgemäßen Verfahrens sind die folgenden:
- Eine bessere und genauere Einstellbarkeit der Dichte des Schaums
- Keine Nachteile einer Vorvernetzung des Polymers vor dem Schäumen, insbesondere in Bezug auf die Homogenität des Schaumstoffs
- Kein aufreißen des Schaums beim Schäumen, insbesondere bei Schäumen mit besonders geringer Dichte (hohem Schäumungsgrad)

### Das Polymer

Die Formulierung (Meth)acrylsäure steht für Methacrylsäure, Acrylsäure oder Mischungen aus beiden. Die Formulierung (Meth)acrylnitril steht für Methacrylnitril, Acrylnitril oder Mischungen aus beiden. Entsprechendes gilt für eine Formulierung wie Alkyl(meth)acrylat. Diese steht für die Alkylester der Methacrylsäure, der Acrylsäure oder von Mischungen aus beiden.

Zur Herstellung des Polymers, zum Beispiel in Form eines Gusspolymerisats werden zunächst Monomergemische, welche (Meth)acrylsäure und (Meth)acrylnitril, vorzugsweise in einem Molverhältnis zwischen 2:3 und 3:2 als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren vorzugsweise nicht mehr als 10 Gew% der beiden Hauptbestandteile betragen. Geringe Mengen von vernetzenden Monomeren, wie z.B. Allylacrylat, können mitverwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 300 °C entweder zersetzen oder verdampfen und dabei eine Gasphase bilden.

Die Polymerisation findet zweckmäßig in Blockform in Gegenwart eines Initiators der radikalischen Polymerisation statt. Bei der Herstellung von flachen Blöcken, z.B. in Schichten mit Dicken bis zu 80 mm, befindet sich das Monomerengemisch zwischen zwei Glasplatten, die am Rand jeweils abgedichtet sind und eine Art Flachkammer bilden. Diese Flachkammer ist von einem Wasserbad umgeben, das auf die gewünschte Polymerisationstemperatur eingestellt wird.

Die Polymerisation kann weitgehend oder über weite Bereiche unter isothermen Bedingungen durchgeführt werden, d.h. bei konstanter Wasserbadtemperatur. In vielen Fällen ist es möglich, von Anfang bis zum Ende der Polymerisation die Wasserbadtemperatur konstant zu halten. Gegebenenfalls kann die Wasserbadtemperatur aber auch zunächst über lange Zeit konstant gehalten werden und nach einer bestimmten Zeit erhöht werden, um einen Teil der Polymerisation bei einer höheren Temperatur durchzuführen.

Auch in dieser nächsten, bei einer höheren Temperatur durchgeführten Polymerisationsphase kann die Wasserbadtemperatur konstant gehalten werden.

Die gewählte Wasserbadtemperatur hängt ab von der Dicke der Polymerisationskammer und der bei der Polymerisation verwendeten Rezeptur, insbesondere den eingesetzten Initiatoren. Dabei ist es im Allgemeinen vorteilhaft, mit steigender Dicke der herzustellenden Platte die Polymerisationstemperatur und damit auch die Temperatur des Wasserbads zu niedrigeren Werten zu verschieben.

Die geeignete Temperatur für Rezeptur und Dicke kann jeweils durch einfache Vorversuche optimiert werden.

Es versteht sich von selbst, dass die Temperatur auf die Dicke der Kammer und der Rezeptur im Rahmen der oben aufgeführten Grenzen so eingestellt wird, dass die bei der Polymerisation frei werdende Wärme in ausreichendem Maße abgeführt werden kann, ohne dass es während der Polymerisation zu unerwünschten Temperaturen im Polymerisationsgemisch kommt. Nach Abschluss des Polymerisationsvorgangs, der vom umgebenden Wasserbad gesteuert wird, wird das Tempern in einem Wärmeschrank durchgeführt. Das Tempern findet im Allgemeinen bei Temperaturen von 80 bis 130 °C statt, wobei, wie bereits ausgeführt, eine gleichmäßig oder in Stufen steigende Temperaturführung, beginnend bei 38 °C, bevorzugt beginnend bei der Polymerisationstemperatur, eingestellt werden kann. Für diese Endpolymerisation im Temperschrank reichen im Allgemeinen 10 bis 1.000 Stunden aus.

### Die Treibmittel

Als Treibmittel (C) können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-äthyl-1,3-dioxan, 2,2'-Azo-bisisobuttersäurebutylamid, 2,2'-Azo-bis-isobuttersäure-N-diethylamid, 2,2',4,4,4',4'-Hexamethyl-2,2'-azopentan, 2,2'-Azo-bis-2-methyl-propan, Dimethylcarbonat, Di-tert-butycarbonat, Acetoncyanhydrincarbonat, Oxi-isobuttersäuremethylester-carbonat, N-Methylurethan, N-Ethylurethan, N-tert-butylurethan, Urethan, Oxalsäure, Maleinsäure, Oxi-isobuttersäure, Malonsäure, Cyanformamid, Dimethylmaleinsäure, Methantetracarbonsäuretetraäthylester, Oxamidsäure-n-butylester, Methantricarbonsäuretrimethylester, Methantricarbonsäuretriäthylester, sowie einwertige Alkohole aus 3 bis 8 Kohlenstoffatomen wie z.B. Propanol-1, Propanol-2, Butanol-1, Butanol-2, tert-Butanol und iso-Butanol.

Daneben können auch copolymerisierbare Treibmittel, die unter den Schäumungsbedingungen eine volatile Verbindung freisetzen und in der Regel danach als (Meth)acrylsäurewiederholungseinheiten im Polymer verbleiben, eingesetzt werden. Beispiele für solche im Allgemeinen bekannten copolymerisierbaren Treibmittel sind iso-Propyl(meth)acrylat und tert-Butyl(meth)acrylat.

### Die Initiatoren

Als Initiatoren werden Verbindungen und Initiatorsysteme verwendet, die radikalische Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert.-butylperoxid, tert.-Butylhydroperoxid, Cumolhydroperoxid, tert.-Butylperoctanoat, tert.-Butylper-2-ethylhexanoat, tert.-Butylperneodecanoat, tert.-Amylperpivalat, tert.-Butylperpivalat, tert.-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure).

Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren in Mengen von 0,01 Gew.-% bis 2 Gew.-%, besonders bevorzugt von 0,15 Gew.-% bis 1,5 Gew.-% bezogen auf das Gesamtgewicht der Monomere eingesetzt.

Die Polymerisation erfolgt vorzugsweise über Varianten der Substanzpolymerisation, wie beispielsweise das so genannte im Stand der Technik beschriebene Kammerverfahren, ohne hierauf beschränkt zu sein.

Ein besonders bevorzugter einsetzbarer Poly(meth)acrylimid-Schaumstoff kann beispielsweise durch folgende Schritte erhalten werden:
1.) Herstellen einer Polymerisatplatte durch radikalische Polymerisation einer Zusammensetzung wie in Anspruch 1 definiert, bestehend aus
   - 20 bis 60 Gew% (Meth)acrylnitril,
   - 40 bis 78 Gew% (Metha)crylsäure,
   - 0 bis 20 Gew% weiteren monofunktionellen, vinylisch ungesättigten Monomeren
   - einem oder mehreren Polyolen in einer derartigen Menge, dass die Hydroxylzahl der Mischung zwischen 0,0008 und 0,2 mol OH-Gruppen / 100 g Polymer, bevorzugt zwischen 0,001 und 0,1 mol OH-Gruppen / 100 g Polymer liegt,
   - 1 bis 15 Gew% eines Treibmittels, eines copolymerisierbaren Treibmittels oder eines Treibmittelgemisches,
   - optional 0 bis 5 Gew% weitere Vernetzer,
   - einem Initiatorsystem und
   - üblichen Zusatzstoffen besteht.
   Bei den weiteren Vernetzern kann es sich um radikalisch polymerisierbare, vinylisch ungesättigte Verbindungen mit mindestens 2 Doppelbindungen im Molekül oder um metallionische Verbindungen, insbesondere um Magnesiumoxid, gelöst in der Monomermischung, handeln. Besonders bevorzugt werden neben den Polyolen keine oder in Summe maximal 1 Gew% zusätzliche Vernetzer eingesetzt.
2.) Diese Mischung wird zwischen 10 Stunden und mehreren Tage bei einer Temperatur - in Abhängigkeit der verwendeten Initiatoren und der eingestellten Materialdicke - zwischen 28 °C und 110 °C in einer aus zwei Glasplatten, beispielsweise der Größe 50 cm ^{∗} 50 cm und einer 2,2 cm dicken Randabdichtung gebildeten Kammer polymerisiert. Anschließend wird das Polymerisat zur Poly(meth)acrylimid Endpolymerisation etwa 20 h einem von 40°C bis 130°C reichenden Temperprogramm unterworfen, wobei die Tempertemperatur unterhalb der durch die eingesetzten Treibmittel eingestellten Schäuumungstemperatur liegt. Die darauffolgende Schäumung erfolgt während einiger Stunden bei zum Beispiel 190 bis 250 °C.

### Optionale Zusatzstoffe für Poly(meth)acrylimide

Des Weiteren können den Gemischen übliche Zusatzstoffe zugesetzt werden. Geeignete Gesamtmengenengen an Zuschlagsstoffen sind z. B. 0 Gew% bis 20 Gew%, 0 Gew% bis 10 Gew% oder 0 Gew% bis 5 Gew%, bezogen auf die Monomermischung. Die üblichen Zusatzstoffe sind dabei verschieden von den genannten Monomeren, Vernetzer, Treibmittelmitteln oder Initiatoren.

Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher. Weitere mögliche Zusätze sind Flammschutzmittel. Neben halogenhaltigen Flammschutzmitteln, die teilweise Antimonoxide enthalten, können auch phosphorhaltige Verbindungen eingesetzt werden. Phosphorhaltige Verbindungen sind wegen der geringeren Rauchgastoxizität im Brandfall bevorzugt. Zu den Phosphorverbindungen gehören unter anderem Phosphane, Phosphanoxide, Phosphoniumverbindungen, Phosphonate, Phosphite und/oder Phosphate. Diese Verbindungen können organischer und/oder anorganischer Natur sein, wie beispielsweise Phosphorsäuremonoester, Phosphonsäuremonoester, Phosphorsäurediester, Phosphonsäurediester und Phosphorsäuretriester sowie Polyphosphate.

Leitfähige Partikel, die eine elektrostatische Aufladung der Schaumstoffe verhindern, sind eine weitere Klasse von bevorzugten Zusatzstoffen. Hierzu gehören unter anderem Metall- und Rußpartikel, die auch als Fasern vorliegen können, mit einer Größe im Bereich von 10 nm bis 10 mm, wie dies in EP 0 356 714 A1 beschrieben ist.

Die erfindungsgemäßen Hartschaumstoffe lassen sich breit einsetzen. So können diese beispielsweise mit Deckschichten, z.B. in Form einer Sandwichstruktur oder eines mit dem Hartschaum gefüllten Pultrodats als Compositematerial verarbeiten. Aus dem Hartschaum können jedoch auch Formteile ohne Deckschichten geschnitten werden. Auch ist es möglich den Schaumstoff nur teilzuschäumen und unter Formgebung endzuschäumen. Weiterhin kann der Schaumstoff vor dem Schäumen granuliert oder direkt, beispielsweise mittels Polymerisation in Form einer Suspensionspolymerisation als Partikel hergestellt werden. Aus solche Mahlguten bzw. Suspensionspolymerisaten lassen sich Partikelschäume bzw. Formkörper aus Partikelschaumstoffen herstellen. Durch Schneiden oder Sägen sind darüber hinaus dünne Schaumplatten oder -folien darstellbar.

Der erfindungsgemäß erhältlichen Schaumstoffe eignen sich insbesondere als Werkstoffkomponente bei der Herstellung von Raum-, Luft-, Wasser-, Schienen- und Landfahrzeugen, wie Automobilen, Fahrrädern oder Motorrädern. Weitere Anwendungsgebiete sind der Bau von Windkraftanlagen oder Sportgeräten, wie zum Beispiel Skier.

### Beispiele

49 gewTeile Methacrylsäure, 50 gewTeile Methacrylnitril, 7 gewTeile tert-Butanol, 2 gewTeile tert-Butylmethacrylat, 0,22 gewTeile MgO, 0,04 gewTeile tert-Butylperpivalat, 0,036 gewTeile tert-Butylper-2-ethylhexanoat, 0,1 gewTeile tert-Butylperbenzoat, 0,103 gewTeile Cumylperneodecanoat, 50 ppm 1,4-Benzochinon und 0,3 gewTeile Moldwiz INT20E (Trennmittel; Hersteller Axel Plastics) sowie die in Tabelle 1 angegebenen Mengen an Polyolen wurden gemischt und so lange gerührt, bis eine homogene Lösung erhalten wurde. Die Lösung wurde zwischen zwei Glasplatten, die durch eine umlaufende Dichtschnur abgedichtet waren, 140 h bei 41 °C zu 2 3mm dicken Polymerplatten polymerisiert. Die Polymerplatten wurden nach dem Abkühlen und der Entnahme aus den Glasplatten bei 115 °C 3 h getempert und dann bei 215 °C für 2 h in einem Umluftofen geschäumt. Die erhaltenen Dichten sind in Tabelle 1 wiedergegeben.

**Tabelle 1**

| **Beispiel** | **Polyol** | **Eingesetzte Menge Polyol (gewTeile)** | **Dichte (kg/m³)** |
|---|---|---|---|
| Vergleichsbeispiel 1 | -- | 0 | 61 |
| Beispiel 1 | Ethylenglycol | 0,2 | 70 |
| Beispiel 2 | Ethylenglycol | 0,8 | 97 |
| Beispiel 3 | Ethylenglycol | 1,5 | 109 |
| Beispiel 4 | 1,10-Decandiol | 0,8 | 80 |
| Beispiel 5 | 1,10-Decandiol | 1,5 | 91 |
| Beispiel 6 | Glycerin | 0,8 | 97 |
| Beispiel 7 | PolyTHF2000 | 2 | 63 |
| Beispiel 8 | PolyTHF2000 | 5 | 71 |

Die Formulierungen der Beispiele unterscheiden sich lediglich in der Art und Menge des eingesetzten Polyole. Man erkennt, dass die Art und Menge des eingesetzten Polyols einen deutlichen Einfluss auf die Dichte des PMI Schaumes (bei gleicher Schäumtemperatur und Schäumzeit [2h]) hat. Somit kann die Dichte des erhaltenen Schaumstoffes lediglich über eine Variation der Menge bzw. Art des Vernetzers eingestellt werden.

Bei Beispiel 6 handelt es sich um ein nicht erfindungsgemäßes Referenzbeispiel.

## Patentansprüche

1. Verfahren zur Herstellung eines Schaumstoffs aus Poly(meth)acrylimid, **dadurch gekennzeichnet, dass** eine Mischung enthaltend (Meth)acrylnitril, (Meth)acrylsäure, ein Polyol, mindestens einen Initiator und mindestens ein Treibmittel zu einer Platte oder einem Pulver polymerisiert, optional getempert, und anschließend bei einer Temperatur zwischen 120 und 300 °C geschäumt wird, wobei
es sich bei dem Polyol um ein Diol handelt und es sich bei dem Diol um Ethylenglycol, 1,10-Decandiol, beta-Hydroxyalkylamide, OH-telecheles Polytetrahydrofuran mit einer mittleren Molmasse zwischen 500 und 8000 g/mol oder um OH-telechele Polyolefine, Polycarbonate, Polyoxymethylene, Polyethylenglycole, Polypropylenglycole, Polyglycerine oder Polyester jeweils mit einer Molmasse zwischen 200 und 10 000 g/mol handelt und
die Mischung aus
- 20 bis 60 Gew% (Meth)acrylnitril,
- 40 bis 78 Gew% (Meth)acrylsäure,
- 0 bis 20 Gew% weiteren monofunktionellen, vinylisch ungesättigten Monomeren
- einem oder mehreren Polyolen in einer derartigen Menge, dass die Hydroxylzahl der Mischung zwischen 0,0008 und 0,2 mol OH-Gruppen / 100 g Polymer, bevorzugt zwischen 0,001 und 0,1 mol OH-Gruppen / 100 g Polymer liegt,
- 1 bis 15 Gew% eines Treibmittels, eines copolymerisierbaren Treibmittels oder eines Treibmittelgemisches,
- optional 0 bis 5 Gew% weitere Vernetzer,
- einem Initiatorsystem und
- üblichen Zusatzstoffen besteht.

2. Verfahren gemäß Anspruch 1, **dadurch gekennzeichnet,**
**dass** die Menge an Polyol in der Mischung derart gewählt ist, dass die Hydroxylzahl zwischen 0,001 und 0,1 mol OH-Gruppen / 100 g Polymer liegt.

3. Verwendung eines Schaumstoffs aus Poly(meth)acrylimid, welcher mittels eines Verfahrens gemäß mindestens einem der Patentansprüche 1 oder 2 hergestellt wurde, zur Herstellung von Raum- , Luft-, Wasser-, Schienen-, Landfahrzeugen, Windrädern oder Sportgeräten.

4. Verwendung eines Schaumstoffs aus Poly(meth)acrylimid, welcher mittels eines Verfahrens gemäß mindestens einem der Patentansprüche 1 oder 2 hergestellt wurde, zur Herstellung von Partikelschäumen, Sandwichmaterialien oder mit dem Schaumstoff gefüllten Pultrudaten.

5. Verwendung eines Partikelschaums, Sandwichmaterials oder mit dem Schaumstoff gefüllten Pultrudats, welche gemäß Anspruch 4 hergestellt wurden, zur Herstellung von Raum- , Luft- , Wasser-, Schienen-, Landfahrzeugen, Windrädern oder Sportgeräten.

## Claims

1. Method for producing a foam of poly(meth)acrylimide, **characterized in that** a mixture comprising (meth)acrylonitrile, (meth)acrylic acid, a polyol, at least one initiator and at least one blowing agent is polymerized to form a slab or a powder, is optionally temperature-conditioned, and then is foamed at a temperature between 120 and 300°C, wherein
the polyol is a diol and the diol is ethylene glycol, 1,10-decanediol, beta-hydroxyalkylamides, OH-telechelic polytetrahydrofuran having an average molar mass between 500 and 8000 g/mol, or comprises OH-telechelic polyolefins, polycarbonates, polyoxymethylenes, polyethylene glycols, polypropylene glycols, polyglycerols or polyesters each having a molar mass between 200 and 10 000 g/mol and
the mixture consists of
- 20 to 60 wt% of (meth)acrylonitrile,
- 40 to 78 wt% of (meth)acrylic acid,
- 0 to 20 wt% of further monofunctional, vinylically unsaturated monomers,
- one or more polyols in an amount such that the hydroxyl number of the mixture is between 0.0008 and 0.2 mol of OH groups/100 g of polymer, preferably between 0.001 and 0.1 mol of OH groups/100 g of polymer,
- 1 to 15 wt% of a blowing agent, of a copolymerizable blowing agent or of a blowing agent mixture,
- optionally 0 to 5 wt% of further crosslinkers,
- an initiator system and
- customary additional substances.

2. Method according to Claim 1, **characterized in that** the amount of polyol in the mixture is selected such that the hydroxyl number is between 0.001 and 0.1 mol of OH groups/100 g of polymer.

3. Use of a foam of poly (meth) acrylimide, produced by means of a method according to at least one of Claims 1 and 2, for producing space, air, water, rail or land vehicles, wind turbines or sports equipment.

4. Use of a foam of poly (meth) acrylimide, produced by means of a method according to at least one of Claims 1 and 2, for producing bead foams, sandwich materials, or pultrudates filled with the foam.

5. Use of a bead foam, sandwich material, or pultrudate filled with the foam, produced according to Claim 4, for producing space, air, water, rail or land vehicles, wind turbines or sports equipment.

## Revendications

1. Procédé pour la préparation d'une mousse de poly(méth)acrylimide, **caractérisé en ce qu'**un mélange contenant un (méth)acrylonitrile, un acide (méth)acrylique, un polyol, au moins un initiateur et au moins un propulseur est polymérisé en une plaque ou une poudre, éventuellement recuit, et ensuite moussé à une température entre 120 et 300 °C,
le polyol étant un diol et le diol étant l'éthylèneglycol, le 1,10-décanediol, un bêta-hydroxyalkylamide, un poly(tétrahydrofuranne) téléchélique en OH doté d'une masse molaire moyenne comprise entre 500 et 8 000 g/mole ou des polyoléfines, des polycarbonates, des polyoxyméthylènes, des polyéthylèneglycols, des polypropylèneglycols, des polyglycérines ou des polyesters téléchéliques en OH à chaque fois dotés d'une masse molaire comprise entre 200 et 10 000 g/mole et
le mélange étant constitué
- de 20 à 60 % en poids de (méth)acrylonitrile,
- de 40 à 78 % en poids d'acide (méth)acrylique,
- de 0 à 20 % en poids d'autres monomères monofonctionnels, vinyliquement insaturés,
- d'un ou plusieurs polyols en une telle quantité que l'indice d'hydroxyle du mélange soit situé entre 0,0008 et 0,2 mole de groupes OH/100 g de polymère, préférablement entre 0,001 et 0,1 mole de groupes OH/100 g de polymère,
- de 1 à 15 % en poids d'un propulseur, d'un propulseur copolymérisable ou d'un mélange de propulseurs,
- éventuellement de 0 à 5 % en poids d'autres agents de réticulation,
- d'un système d'initiateur et
- d'additifs usuels.

2. Procédé selon la revendication 1, **caractérisé en ce que** la quantité de polyol dans le mélange est choisie de telle manière que l'indice d'hydroxyle soit situé entre 0,001 et 0,1 mole de groupes OH/100 g de polymère.

3. Utilisation d'une mousse de poly(méth)acrylimide, qui a été préparée au moyen d'un procédé selon au moins l'une des revendications 1 et 2, pour la fabrication de véhicules spatiaux, d'aéronefs, de bateaux, de véhicules ferroviaires, de véhicules terrestres, d'éoliennes ou d'appareils de sport.

4. Utilisation d'une mousse de poly(méth)acrylimide, qui a été préparée au moyen d'un procédé selon au moins l'une des revendications 1 et 2, pour la préparation de mousses de particules, de matériaux en sandwich ou de pultrudats remplis avec la mousse.

5. Utilisation d'une mousse de particules, d'un matériau en sandwich ou d'un pultrudat rempli avec la mousse, qui ont été préparés selon la revendication 4, pour la fabrication de véhicules spatiaux, d'aéronefs, de bateaux, de véhicules ferroviaires, de véhicules terrestres, d'éoliennes ou d'appareils de sport.
